# EUROPEAN PATENT APPLICATION

(11) **EP 1 380 877 A1**
(43) Date of publication of application: **14.01.2004**
(21) Application number: 03076911.1
(22) Date of filing: 19.06.2003
(51) Int. Cl.: G02F 1/13363, G02B 5/30, G02F 1/1337

(54) **Nematic liquid crystal compensator with barrier layer and manufacturing process**

(30) Priority: 12.07.2002 US 194130
(71) Applicant: EASTMAN KODAK COMPANY, Rochester, New York 14650 (US)
(72) Inventor: Bauer, Charles L., c/o Eastman Kodak Company, Rochester, New York 14650-2201 (US); Carroll-Lee,Ann L., c/o Eastman Kodak Company, Rochester, New York 14650-2201 (US); Castle, Richard A., c/o Eastman Kodak Company, Rochester, New York 14650-2201 (US); Elman, James F., c/o Eastman Kodak Company, Rochester, New York 14650-2201 (US); Hoff, Joseph W., c/o Eastman Kodak Company, Rochester, New York 14650-2201 (US); Houghtaling, Bradley M., c/o Eastman Kodak Company, Rochester, New York 14650-2201 (US); Nair, Mridula., c/o Eastman Kodak Company, Rochester, New York 14650-2201 (US); Payne, Jason A., c/o Eastman Kodak Company, Rochester, New York 14650-2201 (US); Shukla, Deepak., c/o Eastman Kodak Company, Rochester, New York 14650-2201 (US); Teegarden, David M., c/o Eastman Kodak Company, Rochester, New York 14650-2201 (US); Trest, Jeffrey A., c/o Eastman Kodak Company, Rochester, New York 14650-2201 (US)
(74) Representative: Haile, Helen Cynthia

(57) **Abstract**

Disclosed is an optical compensator (5) for a liquid crystal display comprising a transparent polymer support (10), a photo-alignment layer (20), an anisotropic layer comprising a nematic liquid crystal (30), and located between the support and the photo-alignment layer, an impermeable barrier layer (60). The invention also provides a process for making such compensators.

## Description

This invention relates to an optical compensator for improving viewing angle characteristics of liquid crystal displays having a transparent polymer substrate, an impermeable barrier layer, a photo-alignment orientation layer, and an optically anisotropic layer comprising a nematic liquid crystal.

Current rapid expansion in the liquid crystal display (LCD) applications in various areas of information display is largely due to improvements of display qualities. Contrast, color reproduction, and stable gray scale intensities are important quality attributes for electronic displays, which employ liquid crystal technology. The primary factor limiting the contrast of a liquid crystal display is the propensity for light to "leak" through liquid crystal elements or cell, which are in the dark or "black" pixel state. Furthermore, the leakage and hence contrast of a liquid crystal display are also dependent on the angle from which the display screen is viewed. Typically the optimum contrast is observed only within a narrow viewing angle centered about the normal incidence to the display and falls off rapidly as the viewing angle is increased. In color displays, the leakage problem not only degrades the contrast but also causes color or hue shifts with an associated degradation of color reproduction. In addition to black-state light leakage, the narrow viewing angle problem in typical twisted nematic liquid crystal displays is exacerbated by a shift in the brightness-voltage curve as a function of viewing angle because of the optical anisotropy of the liquid crystal material.

Thus, one of the major factors measuring the quality of such displays is the viewing angle characteristic, which describes a change in contrast ratio from different viewing angles. It is desirable to be able to see the same image from a wide variation in viewing angles and this ability has been a shortcoming with liquid crystal display devices. One way to improve the viewing angle characteristic is to insert a compensator (also referred as compensation film, retardation film, or retarder) with proper optical properties between the polarizer and liquid crystal cell, such as disclosed in U.S. Patents 5,583,679 (Ito *et al.*), 5,853,801 (Suga *et al.*), 5,619,352 (Koch *et al.*), 5,978,055 (Van De Witte *et al.*), and 6,160,597 (Schadt *et al.).* A compensation film according to U.S. Patents 5,583,679 (Ito *et al.)* and 5,853,801 (Suga *et al.),* based on discotic liquid crystals which have negative birefringence, is widely used. It offers improved contrast over wider viewing angles, however, it suffers larger color shift for gray level images, compared to a compensator made of liquid crystalline materials with positive birefringence, according to Satoh et al. ("Comparison of nematic hybrid and discotic hybrid films as viewing angle compensator for NW-TN-LCDs", SID 2000 Digest, pp. 347-349, (2000)). To achieve comparable performance in the contrast ratio while reducing color shift, one alternative is to use a pair of crossed liquid crystal polymer films (LCP) on each side of liquid crystal cell, as discussed by Chen et al. ("Wide Viewing Angle Photoaligned Plastic Films", SID 99 Digest, pp. 98-101 (1999)). This paper states that "since the second LPP/LCP retarder film is coated directly on top of the first LCP retarder film, the total thickness of the final wide-view retarder stack is only a few microns thin". Although they provide very compact optical component, one of the challenges of this method is to make two LCP layers crossed, particularly in a continuous roll to roll manufacturing process.

The compensating films are prepared by coating an alignment layer and anisotropic liquid crystal materials from organic solvents onto a transparent plastic base. The solvents used to coat the alignment layer also act as attack or swelling agents for the support. This causes low molecular weight material in the base such as polymer, plasticizers, and dyes to be extracted from the support which then intermix with the alignment layer coating. The intermixing or interdiffusion of the two layers can prevent the alignment layer from aligning during the alignment process which results in a poor alignment of the liquid crystal layer particularly when the liquid crystal layer is a nematic or positive birefringent liquid crystal. When viewed through crossed-polarizers, this poor alignment results in poor contrast or difference between light and dark state. The solvent coating of the alignment layer also causes unwanted curling of the support when materials such as triacetyl cellulose (or triacetate cellulose) are used as the support material. Other defects such as bubbles or voids in the coating can also be observed if there is unwanted interaction between the support and the alignment layer layer.

US 5583679, US6061113, and US 6081312 describe the use of subbing or undercoat layers to improve the adhesion of alignment layers and an optically anisotropic layer comprising a discotic liquid crystal material to the support.

It is a problem to be solved to provide an optical compensator that widens the viewing angle characteristics of liquid crystal displays, in particular Twisted Nematic (TN), Super Twisted Nematic (STN), Optically Compensated Bend (OCB), In Plane Switching (IPS), or Vertically Aligned (VA) liquid crystal displays, is readily manufactured, does not cause unwanted curl of the support and improves the ability of the alignment layer to align. These various liquid crystal display technologies have been reviewed in U.S. Patents 5,619,352 (Koch *et al.),* 5,410,422 (Bos), and 4,701,028 (Clerc *et al.).*

In spite of the progress in liquid crystal display technology, there remains a need for a compensator that exhibits improved viewing quality

The invention provides optical compensator for a liquid crystal display comprising a transparent polymer support, a photo-alignment layer, an anisotropic layer comprising a nematic liquid crystal, and located between the support and the photo-alignment layer, an impermeable barrier layer. The invention also provides a process for making such compensators.

The optical compensator exhibits improved viewing quality. It widens the viewing angle characteristics of liquid crystal displays such as Twisted Nematic (TN), Super Twisted Nematic (STN), Optically Compensated Bend (OCB), In Plane Switching (IPS), and Vertically Aligned (VA) liquid crystal displays, is readily manufactured, and does not cause unwanted curl of the support and improves the ability of the alignment layer to align.
FIG. 1 is a cross-sectional schematic view of a compensator of the present invention.
FIGS. 2A and 2B are cross-sectional schematic views of various embodiments of the present invention.
FIG. 3 is a schematic concept in accordance with the present invention.
FIG. 4 shows a liquid crystal display in combination with a compensator according to the present invention.
FIG. 5 shows a roll-to-roll process for making a compensator according to the present invention.

The current invention regarding the optical compensator for liquid crystal displays is summarized above. The term impermeable is employed to mean that the barrier is effective to substantially prevent the passage of components from the support to the orientation and /or the anisotropic layer which tend to adversely affect the optical properties of the compensator or prevent coating solvents for the orientation layer from passing into the support which adversely affect the dimensional stability of the support.. The invention is described in more detail by referring to the drawings as follows.

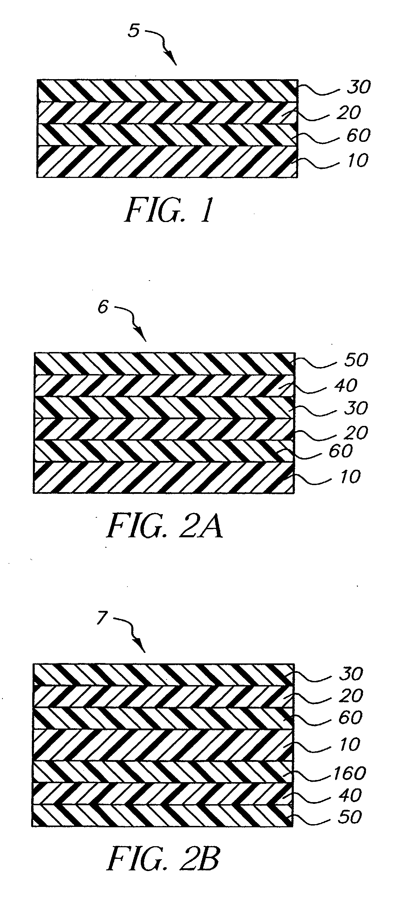

FIG. 1 shows a cross-sectional schematic view of an optical compensator **5** according to the present invention. This compensator comprises a substrate **10** of transparent material, such as a polymer. It should be understood that to be called as a substrate, a layer must be solid and mechanically strong so that it can stand alone and support other layers. A typical substrate is made of triacetate cellulose (TAC), polyester, polycarbonate, polysulfone, polyethersulfone, or other transparent polymers, and has a thickness of 25 to 500 micrometers. Substrate **10** typically has low in-plane retardation, preferably less than 10 nm, and more preferably less than 5 nm. In some other cases, the substrate **10** may have larger in-plane retardation between 15 to 150 nm. Typically, when the substrate **10** is made of triacetyl cellulose, it has out-of-plane retardation around -40 nm to -120 nm. This is a desired property when the compensator is designed to compensate a liquid crystal state with an ON voltage applied. The in-plane retardation discussed above is defined as the absolute value of (nx-ny)d and the out-of-plane retardation discussed above is defined as [nz-(nx+ny)/2]d, respectively. The refractive indices nx and ny are along the slow and fast axes in plane of the substrate, respectively, nz is the refractive index along the substrate thickness direction (Z-axis), and d is the substrate thickness. The substrate is preferably in the form of a continuous (rolled) film or web.

On the substrate 10, a barrier layer 60 is applied, an orientation layer 20 is disposed on top of layer 60, and an anisotropic nematic liquid crystal layer 30 is disposed on top of layer 20.

The barrier layer, 60, comprises a material that does not dissolve in organic solvents which include ketones, tolune, alkyl acetates, ethers, and alcohols. Preferably the barrier layer is a water soluble polymer which includes polyvinyl alcohols and copolymers thereof, gelatin, gelatin derivatives, casein, agar, sodium alginate, starch, acrylic acid containing polymers, maleic anhydride containing polymers, cellulose esters such as carboxymethylcellulose, hydroxypropyl methyl cellulose, and polyacrylamides. Gelatin is most preferred.

The impermeable barrier layer may also be crosslinked using known methods such as the addition of crosslinking agents, such at isocyanates, aldehydes, vinyl sulfone materials, aziridines and melamine resins.

The impermeable barrier layer may be applied at dry coverages between 0.10 to 5.5 g/m², preferably between 0.55 and 3 g/m².

The impermeable barrier is applied to the transparent support by known coating techniques from water. It may be dried using conventional techniques. When gelatin is used as the material, additional improvements are observed if it is chilled between 5 and 20°C after applying it to the support.

Addenda such as surfactants, other water-soluble polymers, polymer latexes, and polymer dispersions may be added to the impermeable barrier layer to improve coating quality, adhesion and other properties of the layer. Additionally an auxiliary layer on top of the impermeable barrier layer may be applied to improve adhesion.

A subbing layer is preferably formed on the transparent support to increase bonding strength between the transparent support and the barrier layer. The subbing layer is formed on the transparent support by a coating method. An optional surface activation treatment to the support may be provided before application of the subbing layer. Surface activation treatments include a chemical treatment, a mechanical treatment, a corona discharge treatment, a flame treatment, a UV treatment, a high frequency wave treatment, a glow discharge treatment, an active plasma treatment, or an ozone oxidation treatment. Examples of known materials for the subbing layer include copolymers derived from vinyl chloride, vinylidene chloride, butadiene, methacrylic acid, acrylic acid, itaconic acid, and maleic anhydride; polyethyleneimine; an epoxy resin; a grafted gelatin; nitrocellulose; halogen-containing resin such as polyvinyl bromide, polyvinyl fluoride, polyvinyl acetate, chlorinated polyethylene, chlorinated polypropylene, brominated polyethylene, chlorinated rubber, vinyl chloride/ethylene copolymer, vinyl chloride/propylene copolymer, vinyl chloride/styrene copolymer, isobutylene chloride containing copolymer, vinyl chloride/vinylidene chloride copolymer, vinyl chloride/styrene/maleic anhydride copolymer, vinyl chloride/styrene/acrylonitrile copolymer, vinyl chloride/butadiene copolymer, vinyl chloride/isoprene copolymer, vinyl chloride/chlorinated propylene copolymer, vinyl chloride/vinylidene chloride/vinyl acetate copolymer, vinyl chloride/acrylic acid ester copolymer, vinyl chloride/maleic acid ester copolymer, vinyl chloride/methacrylic acid ester copolymer, vinyl chloride/acrylonitrile copolymer, internally plasticized poly(vinyl chloride), vinyl chloride/vinyl acetate copolymer, poly(vinylidene chloride), vinylidene chloride/methacrylic acid ester copolymer, vinylidene chloride/acrylonitrile copolymer, vinylidene chloride/acrylic acid ester copolymer, chloroethyl vinyl ether/acrylic acid ester copolymer and polychloroprene; .alpha.-olefin polymers such as polyethylene, polypropylene, polybutene, poly-3-methylbutene and poly-1,2-butadiene; copolymers such as ethylene/propylene copolymer, ethylene/vinyl ether copolymer, ethylene/propylene/1,4-hexadiene copolymer, ethylene/vinyl acetate copolymer, 1-butene/propylene copolymer and butadiene/acrylonitrile copolymer, and blends of these copolymers and halogen-containing resins; acrylic resin such as methylacrylate/acrylonitrile copolymer, ethyl acrylate/styrene copolymer, methyl methacrylate/acrylonitrile copolymer, poly(methyl methacrylate), methyl methacrylate/styrene copolymer, butyl methacrylate/styrene copolymer, polymethyl acrylate, polymethyl .alpha.-chloroacrylate, polymethoxyethyl acrylate, polyglycidylacrylate, polybutyl acrylate, polymethyl acrylate, polyethyl acrylate, acrylic acid/butyl acrylate copolymer, acrylic acid ester/butadiene/styrene copolymer, and methacrylic acid ester/butadiene/styrene copolymer; resins of styrene such as polystyrene, poly-.alpha.-methylstyrene, styrene/dimethylfumarate copolymer, styrene/maleic anhydride copolymer, styrene/butadiene copolymer, styrene/butadiene/acrylonitrile copolymer, poly(2,6-dimethylphenleneoxide) and styrene/acrylonitrile copolymer, polyvinyl carbazole; poly(p-xylylene); polyvinyl formal; polyvinyl acetal; polyvinyl butyral; poll/vinyl phthalate; cellulose triacetate; cellulose butyrate; cellulose phthalate; nylon 6; nylon 66; nylon 12; methoxymethyl-6-nylon; nylon-6, 10-polycapramide; poly-N-butyl-nylon-6-polyethylene sebacate; polybutylene glutarate; polyhexamethylene adipate; polybutylene isophthalate; polyethylene terephthalate; polyethylene adipate; polyethylene adipate terephthalate; polyethylene-2,6- naphthalate; polydiethylene glycol terephthalate; polyethyleneoxybenzoate; bisphenol A isophthalate; polyacrylonitrile; biphenyl A adipate; polyhexamethylene-m-benzenesulfoneamide; polytetramethylenehexamethylene carbonate; polydimethyl siloxane; polyethylene methylene-bis-4-phenylene carbonate; and bisphenol A polycarbonate (described in, for example, E,. H. Immergut "Polymer Handbook", Vol. IV. pages 187-231, Interscience Pub. New York, 1988). Blends of hydrophilic and hydrophobic materials may also be used as in subbing layers. A preferred subbing material is a mixture of cellulose nitrate and gelatin. Examples of materials for the use in this mixture include water soluble polymers, cellulose esters, polymer latex, and a water soluble polyester. Examples of materials for the water soluble polymer include gelatin, gelatin derivatives, casein, agar, sodium alginate, starch, polyvinyl alcohol, an acrylic acid- containing copolymer and a maleic anhydride -containing copolymer. Examples of materials for the cellulose ester include carboxymethylcellulose and hydroxyethylcellulose. Examples of materials for the hydrophobic material include polymer latexes such as vinyl chloride-containing copolymer, a vinylidene chloride-containing copolymer, acrylic acid ester-containing copolymer, vinyl acetate-containing copolymer, and a butadiene-containing copolymer.

The subbing layer may further contain a surface active agent, an antistatic agent, and a pigment.

The orientation layer **20** can be oriented by a photo-alignment technique. Photo-orientable materials include, for example, photo isomerization polymers, photo dimerization polymers, and photo decomposition polymers. In a preferred embodiment, the photo-orientable materials are cinnamic acid derivatives as disclosed in U.S. Patent 6,160,597. Such materials may be oriented and simultaneously crosslinked by selective irradiation with linear polarized UV light.

The photo-alignment process may be accomplished by using an apparatus as described in a commonly assigned and cofiled application under U.S. Serial No. to be completed (Docket No. 84833), the contents of which are incoporated herein by reference.

The anisotropic layer **30** is a nematic liquid crystalline monomer when it is first disposed on the orientation layer **20**, and is cross-linked by a further UV irradiation, or polymerized by other means such as heat. In a preferred embodiment, the anisotropic layer contains a material such as a diacrylate or diepoxide with positive birefringence as disclosed in U.S. Patent 6,160,597 (Schadt *et al.)* and U.S. Patent 5,602,661 (Schadt *et al.).* The optic axis in the anisotropic layer **30** is usually tilted relative to the layer plane, and varies across the thickness direction.

The anisotropic layer may also contain addenda such as surfactants, light stabilizers and UV initiators. Surfactants useful in the layer include, but are not limited to: fluorinated surfactants including polymeric fluorochemicals such as fluoro(meth)acrylate polymers; fluorotelomers such as those having the structure R_{f}CH₂CH₂OOC-C₁₇H₃₅ or (R_{f}CH₂CH₂OOC)₃C₃H₅O, wherein R_{f} is CF₃CF₂(CF₂CF₂)_{x=2 to 4}, ethoxylated nonionic fluorochemicals such as those having the general structure R_{f}CH₂CH₂O(CH₂CH₂O)_{y}H, wherein R_{f} is CF₃CF₂(CF₂CF₂)_{x=2 to 4}, and fluorosilcones; silicone surfactants such as polysiloxanes; polyoxyethylene-lauryl ether surfactants; sorbitan laurate; palmitate; and stearates.

Preferred surfactants for use in the present invention are fluorinated surfactants. Such surfactants are preferred due to their effectiveness at very low concentrations and their chemical and thermal stabilities. Particularly preferred fluorinated surfactants are polymeric fluorochemicals, such as fluoro(meth)acrylates, and ethoxylated nonionic fluorochemicals. Non-limiting commercially-available examples of fluoro(meth)acrylates include Zonyl FSG (DuPont) and Modiper F-2020 (NOF Corporation). Non-limiting commercially-available examples of ethoxylated nonionic fluorochemicals include Zonyl FSN and Zonyl FSO (DuPont).

UV initiatiors useful in the layer include, but are not limited to, materials such as benzophenone and acetophenone and their derivatives; benzoin, benzoin ethers, benzil, benzil ketals, fluorenone, xanthanone, alpha and beta naphthyl carbonyl compounds and ketones. Preferred initiators are alpha-hydroxyketones.

The anisotropic layer 30 in accordance with the present invention is conveniently applied from a liquid medium containing an organic solvent mixture that is both miscible with the liquid crystal monomer and has an average boiling point of 85°C to 130°C. The average boiling point is defined as the weighted average boiling point of the solvents contained in the mixture. For organic mixtures having average boiling points of less than 85°C the resulting optical ansiotropic layer is highly prone to the formation of coating defects that include mottle, drying convection cells, repellencies, etc. For organic solvent mixtures having boiling points of about greater than 130°C excessive drying times are required. Preferably the organic solvent mixtures have average boiling points of 85°C to 120°C, and more preferably 85°C to 110°C. The liquid crystal polymer layer may be applied using conventional coating techniques at wet coverages of between 5 to 100 cc/m², preferably between 10 and 50 cc/m². Dry coating weight of the optical ansiotropic layer may range from 100 to 10,000 mg/m², preferably range from 250 to 2000 mg/m².

The anisotropic layer may also contain a polymeric additive to increase the viscosity of the coating solution used to apply the layer.

While this type of compensator described above provides some desired optical properties, it is not sufficient in many applications, for example, as a compensator for Twisted Nematic (TN) Liquid Crystal Displays (LCDs).

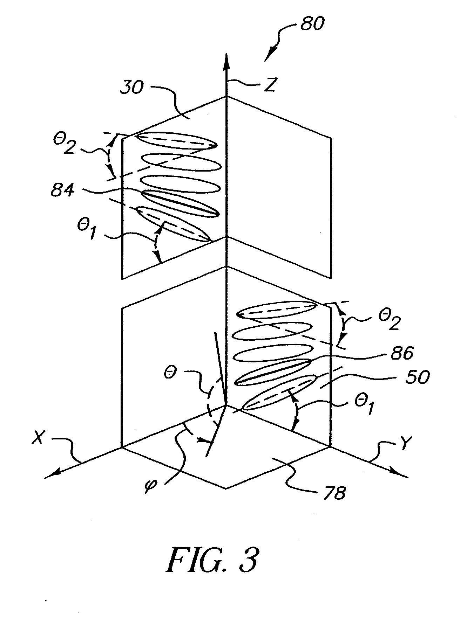

FIG. 2A illustrates a more sophisticated optical compensator **6** of the invention that contains a second orientation layer **40** and a second anisotropic layer **50** on top of the first anisotropic layer **30**. The second orientation layer **40** and the second anisotropic layer **50** are made essentially in the same way as the first orientation layer **20** and the first anisotropic layer **30** are made, except that the direction of the orientation may vary. For the purpose of illustration, refer to an XYZ coordinate system **80** as shown in FIG. 3. The X and Y axes are parallel to the plane of substrate **78,** and the Z-axis is perpendicular to the plane of substrate **78.** The angle ϕ is measured from the X-axis in the XY plane, and referred as an azimuthal angle. The angle θ is measured from the XY plane, and referred as a tilt angle.

It should be understood that the optic axis in each of the anisotropic layers **30** and **50** can have a variable tilt angle and/or variable azimuthal angle. For example, the optic axis **84** in the anisotropic layer **30** has a variable tilt angle θ across the Z-axis ranging from θ₁ to θ₂. In another example, the optic axis **84** has a fixed tilt angle θ across the Z-axis, namely, θ₁ = θ₂. In another example, the optic axis **84** is contained in one plane such as the XZ plane and consequently has a fixed azimuthal angle ϕ across the Z-axis. In another example, although the anisotropic layer **30** is still oriented along the preferred direction forced by the orientation layer at their interface, the optic axis **84** has a variable azimuthal angle *ϕ* across the Z-axis. The azimuthal angle of the optic axis **84** can be varied by adding a proper amount of chiral dopant into the anisotropic layer **30.** In another example, the optic axis **84** has a variable tilt angle θ and a variable azimuthal angle ϕ across the Z-axis. Like the optic axis **84** of the anisotropic layer **30,** the optic axis **86** of the anisotropic layer **50** can also have a fixed tilt angle, a variable tilt angle, a fixed azimuthal angle, a variable azimuthal angle, or a variable tilt angle and a variable azimuthal angle across the Z-axis. The anisotropic layers **30** and **50** typically have different optic axis. Preferably the anisotropic layer **30** is positioned orthogonally relative to the respective optic axis of the anisotropic layer **50** about an axis perpendicular to the plane of the substrate. Even though the optic axis of the anisotropic layer **30** is preferred to be orthogonal (or ±90 degrees) relative to the respective (or counterpart) optic axis of the anisotropic layer **50** about an axis perpendicular to the plane of the substrate, it should be understood that the angle between the optic axis of the two anisotropic layers can be in a range of 85 to 95 degrees to be considered as orthogonal.

For the manufacture of more complex layer structures than that illustrated in FIG. 2A, additional orientation and anisotropic layers can be applied in further steps.

FIG. 2B illustrates another optical compensator **7** of the invention in which the second orientation layer **40** and the second anisotropic layer **50** are on the opposite side of the substrate from the first orientation layer **20** and the first anisotropic layer **30** and a second barrier layer **160** is employed.

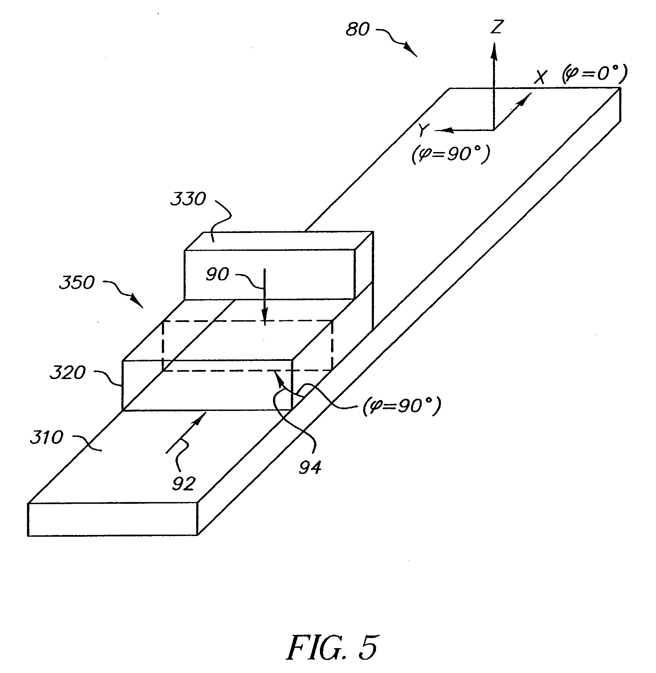

**FIG. 5** shows another aspect of the present invention. A compensator **350** can be manufactured on a continuous roll-to-roll basis as shown in FIG. 5 which shows part of a schematic view of the process. The roll-to-roll process of forming a compensator **350** comprises the steps of applying a photo-alignable orientation layer **320,** for example by coating by any known method such as extrusion hopper coating, roll-coating, slide hopper coating, or curtain coating, the orientable material in a solvent, onto a moving substrate **310,** drying the orientation layer **320,** photo-aligning (orienting) the orientation layer **320** in a predetermined alignment direction ϕ **94,** (for the purpose of illustration ϕ =90°) relative to the roll moving direction **92,** coating (as described earlier??)an anisotropic layer **330** comprising a polymerizable material in a solvent carrier onto the orientation layer **320,** drying the anisotropic layer **330**, polymerizing the anisotropic layer **330** to form a continuous web of compensator. Note that for clarity, FIG. 5 only shows part of the orientation layer **320** and anisotropic layer **330.**

The orientation layer is aligned in a direction **94** of **90** degrees (ϕ=90⁰) relative to the roll moving direction **92**by a photo-alignment technique; for example, the orientation layer is exposed to a linearly polarized ultraviolet (UV) light indicated by **90**. It may or may not be collimated, however, the projection (pointing along **94**) of the principal ray of the light **90** onto the roll makes an angle of 90 degrees relative to the roll moving direction.

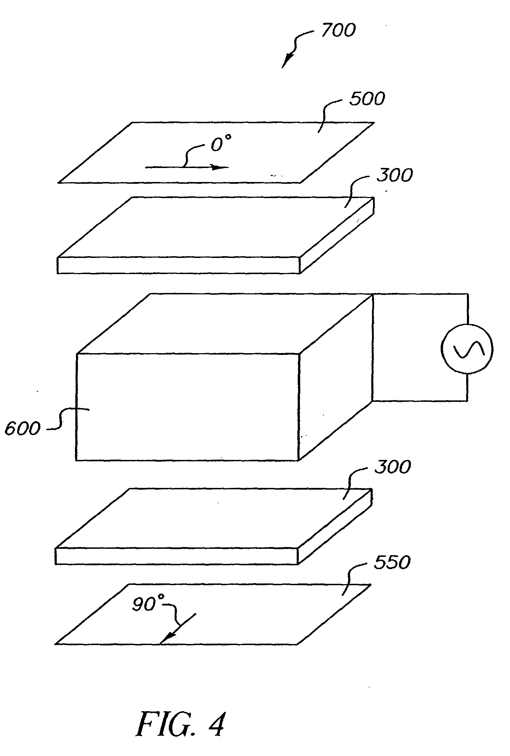

FIG. 4 is a schematic view of a liquid crystal display **700** comprising the compensator **300** in accordance with the present invention. In FIG. 4B, one compensator **300** is placed between the first polarizer **500** and the liquid crystal cell **600,** and another compensator **300** is placed between a second polarizer **550** and the liquid crystal cell **600.** The liquid crystal cell **600** is preferred to be operated in a Twisted Nematic (TN), Super Twisted Nematic (STN), Optically Compensated Bend (OCB), In Plane Switching (IPS), or Vertically Aligned (VA) mode. The polarizers **550** and **500** can be arranged crossed or parallel depending on the operation principles of the liquid crystal cell. The orientation layer in the compensator can be arranged parallel, perpendicular, or at a predetermined angle relative to the first polarizer **500**. The liquid crystal cell can also be operated in a reflective mode, in which it may only require one polarizer.

The invention may be used in conjunction with electronic imaging device comprising a liquid crystal display device. The energy required to achieve this control is generally much less than that required for the luminescent materials used in other display types such as cathode ray tubes. Accordingly, liquid crystal technology is used for a number of applications, including but not limited to digital watches, calculators, portable computers, electronic games for which light weight, low power consumption and long operating life are important features.

The present invention is illustrated in more detail by the following non-limiting examples.

### Examples:

To prepare samples, first a triacetyl cellulose support (thickness indicated in table) was coated with a subbing solution of the following composition:
70.16% acetone
27.17% methanol
1.31% water
0.15% isopropanol
0.35% cellulose nitrate
0.71% gelatin
0.14% salicylic acid

This solution was applied to the TAC support at a wet coverage of 18.3 g/m² and dried. To this was applied a solution of the indicated impermeable barrier using 0.01% Triton TX-100 surfactant to give the indicated dry coverage, see table 1. After the applying the solution the coated support was either dried at 100°C to remove water or first chilled at 4°C to gel the layer and then mildly dried between 20 and 60°C.

On top of the impermeable barrier layer a photo-alignment layer was coated from the following solution at a wet coverage of 16.5 g/m².
23.30% Staralign 2110MEK (2% active, polyvinyl cinnamate polymer with an alpha-hydroxy ketone photoinitiator), from Vantico
13.95% methyl ethyl ketone
22.75% cyclohexanone
40.00% n-propyl acetate

After drying to remove solvents, the sample was exposed to linearly polarized UVB light at a 20 degree angle. Subsequently, a solution of a diacrylate nematic liquid crystal material was coated onto the layer at a wet coverage of 9.33 g/m² and dried.
29.00% LCP CB483MEK (30% active, liquid crystal prepolymer) from Vantico
62.00% Toluene
9.00% ethyl acetate

After drying, the coated structure was exposed to 400 mJ/cm² of UVA to crosslink the liquid crystal layer.

The samples were then evaluated for coating defects (curl or bubbles in the coatings) and contrast which is the ability to form a light and dark state when rotated between crossed polarizers with backlighting. Effective barriers will prevent passage of material between the support and alignment layer which then result in no curl or bubble defects and acceptable contrast.

**Table 1**

| # | TAC thickness (µm) | Impermeable barrier layer | Chill Set | Dry Coverage (g/m²) | Curl or bubble defects | Acceptable Contrast |
|---|---|---|---|---|---|---|
| | | | | | | |
| 1 | 127 | None | - | - | Y | N |
| 2 | 127 | Gelatin | N | 1.1 | Y | Y |
| 3 | 127 | Gelatin | Y | 1.1 | N | Y |
| 4 | 127 | Gelatin | Y | 1.1 | N | Y |
| 5 | 127 | 80 % Gelatin and 20% poly(glycidyl methacrylateco-butyl methacrylate) 85/15 latex | Y | 1.1 | N | Y |
| 6 | 127 | 60 % Gelatin and 40% poly(glycidyl methacrylateco-butyl methacrylate) 85/15 latex | Y | 1.1 | N | Y |
| 7 | 127 | 80% Gelatin and 20% poly(butyl acrylate-co-aminoethylmethacrylate hydrochloride-cohydroxyethylmethacrylate) 50/5/45 latex | Y | 1.1 | N | Y |
| 8 | 127 | 60% Gelatin and 40% (butyl acrylate-co-aminoethylmethacrylate hydrochloride-co-hydroxyethylmethacrylate) 50/5/45 latex | Y | 1.1 | N | Y |
| 9 | 127 | Polyacrylamide, carboxyl modified (from Scientific Polymer Products) | Y | 1.1 | N | Y |
| 10 | 127 | Polyvinyl alcohol | Y | 1.1 | N | Y |
| 11 | 127 | Polyvinyl alcohol | Y | 2.2 | N | Y |
| 12 | 127 | Polyvinyl alcohol | Y | 3.3 | N | Y |
| 13 | 80 | Gelatin | N | 2.2 | N | Y |

The data demonstrates that when an impermeable barrier layer was coated between the support and the orientation layer, problems associated with curl and bubble defects and lack of contrast were eliminated.

Embodiment of the invention include those where:
the impermeable barrier layer comprises a polyvinyl alcohol; a polyacrylamide, or a polyvinyl cinnamate polymer or copolymer.
the optic axis of the anisotropic layer has a fixed or variable azimuthal angle, and a fixed or variable tilt angle;
the anisotropic layer contains a material with positive birefringence;
comprises at least two anisotropic layers;
the transparent polymer support comprises a cellulosic polymer,
the barrier layer is present in an amount of 0.10 to 5.5 g/m², typically 0.55 to 3 g/m²;
the an anisotropic layer contains a surfactant, such as a fluorinated surfactant;
the anisotropic layer comprises a high molecular weight polymer having an average molecular weight that is greater than the entanglement molecular weight of the polymer, typically higher than 45,000;
the impermeable barrier layer additionally comprises a crosslinkable polymer.

The invention also includes a continuous process for making an optical compensator on a moving support web, comprising the steps of:
a) coating water soluble resin onto a chilled moving polymer support web;
b) drying the coating to form a barrier layer,
c) coating an orientation layer comprising a photo-alignable polymer in an organic solvent onto the barrier layer;
d) drying the orientation layer;
e) photoaligning the orientation layer in a predetermined direction relative to the web moving direction;
f) coating an anisotropic layer comprising a polymerizable material in a solvent carrier onto the orientation layer;
g) drying the anisotropic layer;
h) polymerizing the anisotropic layer to form a first continuous web of a multilayer integral component;
i) repeating the above steps c) through h) coating over the anisotropic layer obtained from h) but photo-aligning the orientation layer at a predetermined angle to the direction in step e).

The entire contents of the patents and other publications referred to in this specification are incorporated herein by reference.

## Claims

1. An optical compensator for a liquid crystal display comprising a transparent polymer support, a photo-alignment layer, an anisotropic layer comprising a nematic liquid crystal, and located between the support and the photo-alignment layer, an impermeable barrier layer comprising chill-set gelatin.

2. The compensator of claim 1 wherein the impermeable barrier layer comprises a water soluble resin.

3. The compensator of claim 1 wherein the nematic liquid crystal is a UV crosslinkable material.

4. The compensator of claim 1 wherein the gelatin is one chill-set at a temperature of 5-20°C.

5. A process for preparing a compensator of claim 1 for a liquid crystal display comprising providing a chilled transparent support, applying a barrier layer over the support, then coating an orientation layer from an organic solvent over the barrier layer and then drying and aligning the orientation layer, wherein the barrier layer is impermeable and non-swellable in the presence of the organic solvent, and then coating and polymerizing an anisotropic nematic liquid crystal layer comprising a polymerizable material in a solvent carrier over the orientation layer.

6. The process of claim 5 wherein the chilled polymer support is at a temperature of 5-20°C.

7. A process for making an optical compensator of claim 1, comprising the steps of:
a) coating a water soluble resin over a chilled polymer support;
b) drying the coating to form a barrier layer;
c) coating an orientation layer comprising a photo-alignable polymer in a solvent over the barrier layer;
d) drying the orientation layer,
e) photo-aligning the orientation layer in a predetermined direction;
f) coating an anisotropic nematic liquid crystal layer comprising a polymerizable material in a solvent carrier over the orientation layer,
g) drying the anisotropic layer;
h) polymerizing the anisotropic layer
i) repeating steps c) through h) coating over the anisotoropic layer of h) but photo-aligning the orientation layer at a predetermined angle to the direction in step e).

8. The process of claim 7 wherein the predetermined angle of step i) to the direction in step e) is 90°.

9. The process of claim 7 wherein the water soluble resin is gelatin or a polyvinyl alcohol.

10. The process of claim 7 wherein the chilled polymer support is at a temperature of 5-20°C.
